# EUROPÄISCHE PATENTSCHRIFT

(11) **EP 0 355 537 B1**
(45) Veröffentlichungstag und Bekanntmachung des Hinweises auf die Patenterteilung: **21.07.1993**
(21) Anmeldenummer: 89114495.8
(22) Anmeldetag: 05.08.1989
(51) Int. Cl.: F16C 11/06

(54) **Kugelgelenk für Kraftfahrzeuge**
Ball-joint for motor vehicles
Articulation à rotule pour véhicule à moteur

(30) Priorität: 24.08.1988 DE 3828683
(43) Veröffentlichungstag der Anmeldung: 28.02.1990
(73) Patentinhaber: LEMFOERDER METALLWAREN AG., D-49441 Lemförde (DE)
(72) Erfinder: Schäfer, Burkhard, Dipl.-Ing., D-2844 Lemförde (DE); Buhl, Reinhard, Dipl.-Ing., D-4508 Bohmte (DE)
(74) Vertreter: Bruse, Willy Hans Heinrich

(56) Entgegenhaltungen:
- DE-A- 2 456 571
- DE-U- 7 424 445
- GB-A- 1 175 782
- US-A- 3 846 032

## Beschreibung

Die Erfindung betrifft Kugelgelenke für Kraftfahrzeuge mit Gattungsmerkmalen nach dem Oberbegriff des Patentanspruches 1.

Solche Kugelgelenke, bei denen die Gelenkkugel in einer Gelenkschale aus abriebfestem und begrenzt elastischem Kunststoff gelagert und mit dieser Gelenkschale in ein Gehäuse eingesetzt sind, werden in der DE-B-15 75 539 beschrieben. Anstelle der in dieser Druckschrift dargestellten Schlitze in der Gelenkschale sind Nuten an der Innenwand der Gelenkschale aus der DE-B-10 14 441 und der DE-A-24 56 571 bekannt. Zur allgemeinen Reduzierung der Reibung und des Verschleißes im Lager werden Schmierfette eingesetzt, die den tragenden Bereichen des Gelenkes über die Schlitze bzw. über die Schmiernuten der Gelenkschale zugeführt werden.

In der langjährigen Verwendung dieser an sich mit guten Gelenkeigenschaften ausgestatteten Kugelgelenke hat sich gezeigt, daß sich aus fertigungstechnischen Gründen bei der Herstellung von Spritzformen für die Gelenkschalen und durch den Schwund des Kunststoffes beim Spritzen der Gelenkschalen Verdickungen in der Schalenwand am Übergang zum Schlitz bzw. zur Schmiernut ergeben. Diese Verdickungen führen im montierten Zustand des Kugelgelenks zu partiell erhöhten Flächenpressungen, die bei der Bewegung der Gelenkkugel in der Gelenkschale eine fettabstreifende Wirkung haben. Dadurch wird den Tragzonen des Kugelgelenks das Fett entzogen und somit das Gegenteil der an sich beabsichtigten Wirkung erzielt. Dies wird bei einer bekannten Ausbildung nach DE-U-74 24 445 dadurch verhindert, daß das Gelenk eine sehr dünne Gelenkschale ohne Schmiernuten in der Lauffläche aufweist und sich mit auf der Außenseite der Gelenkschale angeordneten Rippen od. dergl. gegen das Gehäuse abstützt.

Ein anderes Problem besteht darin, daß im Zuge der Weiterentwicklung von Bauelementen für Kraftfahrzeuge und der technischen sowie wirtschaftlichen Optimierung solcher Bauelemente die Anforderungen an die Bauelemente, insbesondere auch an Kugelgelenke, hinsichtlich zulässiger Höchstbelastungen, Minimierung der Reibmomente, Nullspiel, geringe Elastizität und hohe Temperaturbeständigkeit steigen.

Der Erfindung liegt daher die Aufgabe zugrunde, bei Kugelgelenken der im Oberbegriff des Patentanspruches 1 genannten Gattung die Wirkung der Schmiernuten zu verbessern und damit eine verbesserte Schmierung zu erreichen.

Eine Lösung dieser Aufgabe wird erfindungsgemäß in einer Ausbildung mit Merkmalen nach dem Kennzeichen des Patentanspruches 1 gesehen.

Dieser Lösung liegt die Erkenntnis zugrunde, daß Reibmomente in dem Kugelgelenk, unter Zuglast gemessen, bis zu einer gewissen Zuglastschwelle nahezu konstant als Funktion des Drehwinkels angesehen werden können. Erst bei Überschreitung dieser Zuglastschwelle beginnen die Drehmomente stetig zu steigen und sich dem Drehmomentniveau von Trockenschmierung asymptotisch anzunähern. Dies ist auf kontinuierlichen Abbau und Verdrängung des Schmiermittels aus der Tragzone des Kugelgelenkes zurückzuführen.

Durch die flachen Aussparungen im Bereich der das Schmiermittel aufnehmenden Nuten wird partiell eine radiale Verformung der Gleitschale in Richtung gegen das Gehäuse ermöglicht, so daß Kantenverdickungen der Gelenkschale an den Nuten bzw. Schlitzen sich nicht mehr sprunghaft auf die Flächenpressung der Gelenkkugel und der Gelenkschale auswirken können. Die fettabstreifende Wirkung dieser Verdickung entfällt somit zugunsten einer gleichbleibenden Schmierung des Kugelgelenkes selbst unter höchsten Belastungen. Die erfindungsgemäße Ausbildung stellt somit einen weiteren Schritt in der technischen und wirtschaftlichen Optimierung eines Kugelgelenkes für Kraftfahrzeuge dar, welches gegenüber bekannten Ausbildungen höher belastbar ist und ein minimiertes Reibmoment aufweist.

Bevorzugt werden flache Aussparungen am Außenmantel der Gleitschale im Bereich der in dieser innen angeordneten Nuten. Dies schließt jedoch nicht aus, daß Aussparungen auch an der Innenfläche des Gehäuses eine entsprechende Wirkung haben werden, jedoch ist eine solche Ausbildung aus fertigungstechnischen Gründen nicht sinnvoll. Konstruktiv können die Aussparungen als flache Kalottenabschnitte mit ebener, konkaver oder konvexer Basis ausgebildet sein.

Ein Ausführungsbeispiel der Erfindung ist auf der Zeichnung dargestellt. Es zeigen:
- Figur 1: ein Kugelgelenk teilweise in Seitenansicht und teilweise im Schnitt,
- Figur 2: einen Schnitt durch eine Polebene der Gelenkschale,
- Figur 3: einen Querschnitt durch nach der Linie III - III in Figur 2,
- Figur 4: ein Schema der Flächenpressung in der Tragzone eines Kugelgelenks und
- Figur 5: partiell einen im Maßstab gegenüber Figur 1 vergrößerten Schnitt durch ein Kugelgelenk.

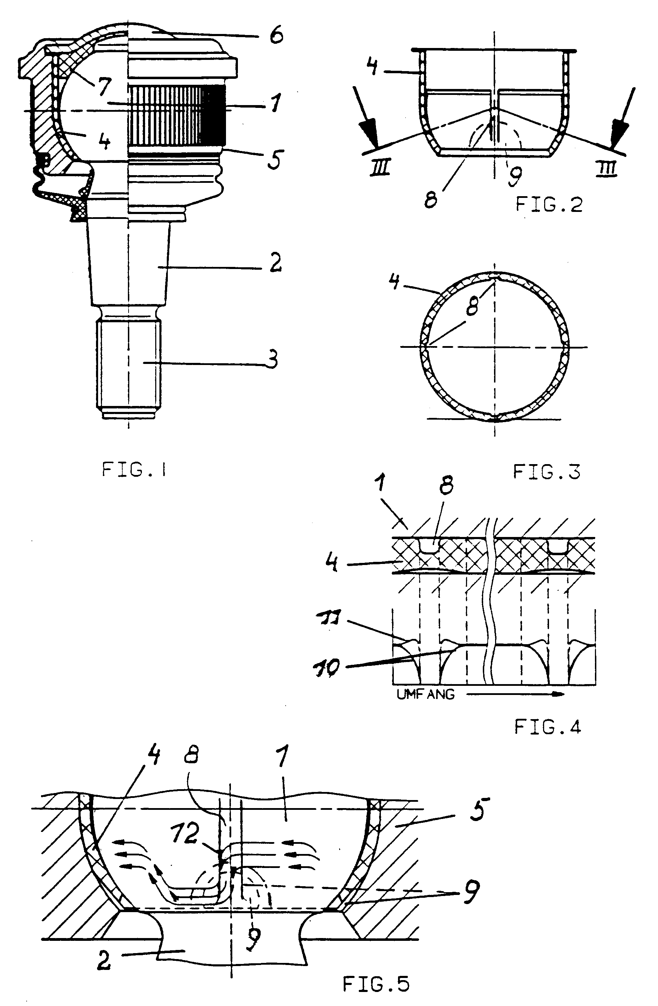

Bei dem Ausführungsbeispiel ist die Gelenkkugel 1 an dem einen Ende eines Gelenkzapfens 2 ausgebildet, dessen anderes Ende einen Gewindezapfen 3 zur Befestigung aufweist. Die Gelenkkugel 1 ist mit einer Gleitschale 4 aus Kunststoff in ein Gehäuse 5 eingesetzt, welches an der offenen Seite durch einen Deckel 6 verschlossen ist. Ein elastisches Polster 7 oder andere federnde Mittel sorgen für einen spielfreien Sitz der Gelenkkugel 1 in der Gleitschale 4. Letztere weist vor allem in der hauptsächlich Belastungen aufnehmenden Hälfte, die der offenen Gehäuseseite abgewendet ist, an der inneren Mantelfläche Schmiernuten 8 auf, die sich peripher nur über einen Teil des Innenumfanges der Gleithülse 4 erstrecken und somit nicht bis zum Rand der Gleithülse durchgehen, so daß das in die Nuten 8 eingebrachte Gleitfett nicht nach außen aus der Gleitschale herausgelangen kann. Im Bereich dieser Nuten 8 sind an der Außenfläche der Gleitschale 4 Aussparungen 9 vorgesehen, wie es sich insbesondere aus der gegenüber den Figuren 1 bis 3 im Maßstab vergrößerten Darstellung der Figur 5 ergibt. Diese Aussparungen 9 ermöglichen dem Werkstoff der Gleitschale 4 eine radiale Ausweichbewegung in geringem Umfange, so daß im Bereich der Kanten der Nuten 8 keine erhöhten Flächenpressungen mehr auftreten können. In der Figur 4 ist schematisch der Verlauf der Flächenpressung in dem von der Erfindung berührten Bereich dargestellt. Die Flächenpressung steigt daher an den Nuten beiderseits kontinuierlich bis auf einen maximalen Wert an, so daß keine Spitzen entstehen, wie sie an herkömmlichen Kugelgelenken zu beobachten sind. In der Figur 4 ist die Kurve der Flächenpressung an dem mit Erfindungsmerkmalen ausgebildeten Gelenk mit der vollen Linie 10 dargestellt. Die bei herkömmlichen Gelenken an den Kanten der Nuten 8 auftretenden Spitzenwerte sind in Figur 4 zum Vergleich mit dünnen Linien 11 ebenfalls eingetragen. Infolge der Vermeidung von Spitzenwerten in der Flächenpressung an den Kanten der Nuten 8 wird eine gegenüber herkömmlichen Kugelgelenken bessere Ausbreitung des Schmiermittels von den Nuten aus erreicht. Die Verteilung des Schmiermittels ist in der Figur 5 mit Pfeilen 12 dargestellt. In dieser Figur ist mit gestrichelten Linien auch die Flächenkontur der Aussparungen 9 beispielsweise wiedergegeben. Im Zustande vor der Montage können die Aussparungen 9 der Gleitschale 4 eine Ebene, eine konvex oder konkav gekrümmte Fläche bilden, wobei im letzteren Falle der Krümmungsradius vom Krümmungsradius der Wandung der Gleitschale 4 abweicht.

## Patentansprüche

1. Kugelgelenk für Kraftfahrzeuge, bei dem eine an einem Gelenkzapfen (2) ausgebildete Gelenkkugel (1) in einer Gleitschale (4) aus Kunststoff beweglich gelagert ist, wobei die Gleitschale (4) an ihrer Innenfläche Schmiermittel aufnehmende Nuten (8) aufweist, und in ein Gehäuse (5) eingesetzt ist, welches mit seiner Innenwand die Außenwand der Gleitschale (4) eng umschließt und abstützt, dadurch gekennzeichnet, daß im Bereich der das Schmiermittel aufnehmenden Nuten (8) zwischen dem Gehäuse (5) und der Gleitschale (4) flache Aussparungen (9) vorgesehen sind, die in diesem Bereich eine radiale Verformung der Gleitschale (4) in Richtung gegen das Gehäuse (5) ermöglichen.

2. Kugelgelenk nach Anspruch 1, dadurch gekennzeichnet, daß die Gleitschale (4) am Außenmantel im Bereich der innen angeordneten Nuten (8) Aussparungen (9) aufweist.

3. Kugelgelenk nach den Ansprüchen 1 und 2, dadurch gekennzeichnet, daß die Aussparungen (9) einen von dem Krümmungsradius des Außenmantels der Gleitschale (4) abweichenden Krümmungsradius aufweisen.

## Claims

1. Ball-and-socket joint for motor vehicles, in which a joint ball (1) formed on a joint pin (2) is movably supported in a sliding socket (4) made of plastic, the sliding socket (4) having on its inner surface grooves (8) for receiving lubricant, and is inserted into a housing (5) whose inner wall closely surrounds and supports the outer wall of the sliding socket (4), characterized in that provided in the region of the grooves (8) for receiving lubricant, between the housing (5) and the sliding socket (4), are flat recesses (9) which in said region allow radial deformation of the sliding socket (4) in the direction of the housing (5).

2. Ball-and-socket joint according to claim 1, characterized in that the sliding socket (4) has recesses (9) at its outer surface in the region of the internally disposed grooves (8).

3. Ball-and-socket joint according to claims 1 and 2, characterized in that the recesses (9) have a radius of curvature which differs from the radius of curvature of the outer surface of the sliding socket (4).

## Revendications

1. Joint à rotule pour véhicules automobiles, dans lequel une rotule (1) formée sur un tourillon (2) d'articulation est logée de façon mobile dans une coquille (4) de glissement en matière plastique, la coquille (4) de glissement présentant dans sa face intérieure des rainures (8) réceptrices de fluide lubrifiant, et est insérée dans un boîtier (5) dont la paroi intérieure entoure étroitement et supporte la paroi extérieure de la coquille (4) de glissement, caractérisé en ce que des évidements peu profonds (9) sont prévus au niveau des rainures (8) réceptrices du fluide lubrifiant, entre le boîtier (5) et la coquille (4) de glissement, ces évidements autorisant dans cette zone une déformation radiale de la coquille (4) de glissement en direction du boîtier (5).

2. Joint à rotule selon la revendication 1, caractérisé en ce que la coquille (4) de glissement comporte des évidements (9) ménagés dans son enveloppe extérieure, situés au niveau des rainures (8) disposées à l'intérieur de la coquille.

3. Joint à rotule selon les revendications 1 et 2, caractérisé en ce que les évidements (9) présentent un rayon de courbure qui est différent du rayon de courbure de l'enveloppe extérieure de la coquille (4) de glissement.
